# EUROPÄISCHE PATENTSCHRIFT

(11) **EP 1 672 012 B1**
(45) Veröffentlichungstag und Bekanntmachung des Hinweises auf die Patenterteilung: **25.03.2015**
(21) Anmeldenummer: 05112263.8
(22) Anmeldetag: 15.12.2005
(51) Int. Cl.: C08K 3/00, C08K 3/36, C08J 3/20

(54) **Verfahren zur Herstellung von Verbundwerkstoffen, Verbundwerkstoff und dessen Verwendung**
Process for the preparation of a composite material, composite material and its use
Procédé pour la préparation d'une matière composite, matière composite et son utilisation

(30) Priorität: 15.12.2004 DE 102004060765
(43) Veröffentlichungstag der Anmeldung: 21.06.2006
(73) Patentinhaber: bene_fit GmbH, 92242 Hirschau (DE)
(72) Erfinder: Kräuter, Reinhard, 92237 Sulzbach-Rosenberg (DE); Cikanek, Roland, 93057 Regensburg (DE); Flierl, Michael, 92242 Hirschau (DE); Van Herzele, Peter, 90402 Nürnberg (DE)
(74) Vertreter: Hannke, Christian

(56) Entgegenhaltungen:
- EP-A- 0 581 225
- WO-A-2004/065469
- DATABASE WPI Section Ch, Week 198802 Derwent Publications Ltd., London, GB; Class A28, AN 1988-009773 XP002364465 & JP 62 271708 A (MITSUBISHI DENKI KK) 25. November 1987 (1987-11-25)

## Beschreibung

Die Erfindung betrifft ein Verfahren zur Herstellung von Verbundwerkstoffen durch Vermischen von kornartigen organischen und/oder anorganischen ersten Füllstoffkomponenten mit vorgegebenem ersten Korngrößenbereich und organischen und/oder anorganischen Bindemittelkomponenten, gemäß dem Oberbegriff des Patentanspruches 1. Des Weiteren betrifft die Erfindung einen Verbundwerkstoff mit kornartigen, anorganischen und/oder organischen ersten Füllstoffkomponenten mit vorgegebenem ersten Korngrößenbereich und organischen und/oder anorganischen Bindemittelkomponenten gemäß dem Oberbegriff des Patentanspruches 7 sowie eine Verwendung derartiger Verbundwerkstoffe gemäß dem Patentanspruch 12.

Herkömmlicherweise werden für die Herstellung von Bauteilen aus Verbundwerkstoffen, wie hochwertigen Küchenspülen, Arbeitsplatten, Sanitärteilen, Fußböden oder Wandbeschichtungen, kornartige anorganische oder organische Füllstoffkomponenten mit Körnern unterschiedlicher Größe, also mehr oder weniger grobe Füllstoffe, mit mindestens einer Bindemittelkomponente vermischt. Derartige Bindemittelkomponenten sind hochpreisig in der Anschaffung.

Demzufolge liegt der vorliegenden Erfindung die Aufgabe zugrunde, ein kostengünstiges Verfahren zur Herstellung von Verbundwerkstoffen, kostengünstige Verbundwerkstoffe sowie die Verwendung derartiger kostengünstiger Verbundwerkstoffe zur Verfügung zu stellen.

Diese Aufgabe wird verfahrensseitig durch die Merkmale des Patentanspruches 1, produktseitig durch die Merkmale des Patentanspruches 7 und verwendungsseitig durch die Merkmale des Patentanspruches 12 gelöst.

Bei einem erfindungsgemäßen Verfahren zur Herstellung von Verbundwerkstoffen durch Vermischen von kornartigen anorganischen und/oder organischen ersten Füllstoffkomponenten mit vorgegebem ersten Korngrößenbereich und organischen und/oder anorganischen Bindemittelkomponenten wird ein Anteil der Bindemittelkomponenten durch mindestens eine zweite feinkornartige Füllstoffkomponente mit gegenüber den ersten Korngrößen kleineren zweiten Korngrößen vor, nach oder während dem Vermischen ersetzt und mit den ersten Füllstoffkomponenten zur Auffüllung von zwischen den Körnern der ersten Füllstoffkomponenten bestehenden Zwischenräumen vermengt. Auf diese Weise werden diese Zwischenräume, welche zwischen den vergleichsweise grobkörnigen Körnern der verwendeten ersten Füllstoffe bestehen, nicht von einem kostenintensiven Gemisch aus den Bindemittelkomponenten, sondern durch die zweiten Füllstoffkomponenten, die sehr feinkornartig ausgebildet sind, aufgefüllt. Dies führt zu einer Optimierung einer Packungsdichte des gesamten Gemisches und somit zu einer Reduzierung der benötigten Anteile an Bindemittelkomponenten. Somit wird eine kostengünstigere Herstellung von Verbundwerkstoffen für die Produktion von Küchenspülen, Arbeitsplatten, Sanitärteilen, Fußböden oder Wandbeschichtungen ermöglicht.

Alternativ können während des Vermischens von den ersten Füllstoffkomponenten mit den Bindemittelkomponenten die zweiten Füllstoffkomponenten oder während des Vermischens von den zweiten Füllstoffkomponenten mit den Bindemittelkomponenten die ersten Füllstoffkomponenten hinzugefügt werden. Unabhängig davon können die Bindemittelkomponenten zu jedem Zeitpunkt des Vermischens der Füllstoffkomponenten hinzugefügt werden.

Durch die Verwendung von kostengünstigen zweiten Füllstoffkomponenten ist eine zusätzliche Kostenreduzierung bei der Herstellung von derartigen Verbundwerkstoffen erreichbar. Hierfür können beispielsweise natürlich vorkommende Füllstoffe, wie Quarzmehl mit verschiedenen Körnungen, Sand, Schwerspat, CaCO₃, Talkum oder Mischungen hieraus verwendet werden. Aufgrund der geringen Korngröße derartiger Füllstoffkomponenten ist eine optimale Ablagerung bzw. Positionierung derartiger zweiter Füllstoffe zwischen den Körnern der ersten Füllstoffe, die größere Durchmesser aufweisen, möglich. Somit wird das Kornband der Gesamtmischung vorteilhaft verändert, um möglichst wenig Bindemittel zusätzlich zur Auffüllung von Zwischenräumen zu benötigen.

Zudem wird durch ein derartiges erfindungsgemäßes Herstellungsverfahren ein Verbundwerkstoff mit im Vergleich zu bisher bekannten Verbundwerkstoffen gleichen rheologischen Eigenschaften erhalten, woraus sich nahezu unverändert gute Verarbeitungseigenschaften für die Produktion von Küchenspülen, Arbeitsplatten, Sanitärteilen, Fußböden und dergleichen ergibt.

Bei der Verwendung von Quarzmehl als zweite Füllstoffkomponente kann dieses bis zu 30 Ma-% des gesamten Füllstoffgemisches ausmachen, so dass ein großer Masse- und Volumenanteil des Füllstoffgemisches durch einen kostengünstigen Füllstoff abgedeckt wird.

Alternativ zu natürlich vorkommenden zweiten Füllstoffkomponenten können synthetische Füllstoffkomponenten, wie beispielsweise Mikroglaskugeln bzw. Glaskugeln verwendet werden. Derartig synthetisch hergestellte Glaskugeln sind zwar hochpreisiger als beispielsweise Quarzmehl, jedoch aufgrund ihrer nahezu ideal runden Kugelform in vergleichsweise wesentlich niedrigeren zuzumischenden Mengen für eine Optimierung der Packungsdichte des gesamten Füllstoffgemisches sowie der Rheologie-Eigenschaften geeignet.

Zudem wird durch Verwendung derartiger Glaskugeln vorteilhaft erreicht, dass eine optische Transparenz der zweiten Füllstoffkomponenten vorliegt, so dass eine Beeinflussung optischer Eigenschaften des Füllstoffgemisches, welches beispielsweise durch die Hinzumischung von Farbstoffkomponenten erreicht werden kann, nicht gegeben ist. Somit ist eine Beibehaltung eines gewünschten Farbcharakters der Füllstoffmischung selbst nach Hinzumischen der zweiten Füllstoffkomponenten, nämlich den Glaskugeln, möglich, wie es häufig bei Wand- und Fußbodenbeschichtungen oder Küchenspülen, Sanitärteilen oder Arbeitsplatten, in welchen dekorative natürliche farbgebende Füllstoffkomponenten, wie Natursplitt, oder gefärbte Füllstoffkomponenten, wie Farbsand oder gefärbtes Quarzmehl, verwendet werden, erwünscht ist.

Gemäß einer bevorzugten Ausführungsform werden bei dem erfindungsgemäßen Verfahren in einem ersten vorangehenden Schritt die Anteile der ersten Füllstoffkomponenten solange verändert und anschließend miteinander vermischt, bis eine gemessene Packungsdichte der vermischten Füllstoffkomponenten ein Maximum erreicht. Hierbei können die ersten Füllstoffkomponenten gegebenenfalls durch dritte kornartige Füllstoffkomponenten mit gegenüber den Korngrößen der ersten Füllstoffkomponenten größeren Korngrößen ersetzt werden, um die optimale Packungsdichte herbeizuführen.

Gemäß einer bevorzugten Ausführungsform können die Körner der zweiten Füllstoffkomponenten zur Verbesserung einer Fließfähigkeit des Füllstoffgemisches, also zur besseren nachgeschalteten Verarbeitung der Verbundwerkstoffe, oberflächenbehandelt, wie beispielsweise silanisiert, werden.

Die als zweite Füllstoffkomponenten verwendbaren kugelförmigen Glaskugeln weisen als Mikroglaskugeln ein Kornband mit einem Durchmesser von 0 - 50 µm oder als Glaskugeln ein Kornband mit Korndurchmessern von 50 µm - 10 mm, vorzugsweise von 75 µm - 150 µm auf. Der Durchmesser der Körner der zweiten Füllstoffkomponenten wird in Abhängigkeit von den Durchmessern der Körner der ersten Füllstoffkomponenten und gegebenenfalls der dritten Füllstoffkomponenten ausgewählt, um eine optimale Auffüllung der Zwischenräume und somit eine maximal mögliche Packungsdichte zu erzielen.

Weitere vorteilhafte Ausführungsformen ergeben sich aus den Unteransprüchen.

Vorteile und Zweckmäßigkeiten sind den nachfolgenden Beispielen zu entnehmen.

### Beispiele

### Beispiel 1

Für einen herzustellenden Fußbodenbelag aus einem Verbundwerkstoff wird zunächst die bestehende Packungsdichte eines ausgewählten Füllstoffkomponenten-Gemisches berechnet. Anschließend werden miteinander zu vermischende erste Füllstoffkomponenten, nämlich Quarzsand mit drei unterschiedlichen Korngrößen, wie es in der nachfolgenden Tabelle 1 aufgeführt ist, in ihren Ma-%-Anteilen so lange verändert, bis ein Maximum der zu erreichenden Packungsdichte des gesamten Füllstoffgemisches erreicht wird.

**Tabelle 1**

| **Mischung- Nr.** | **Komponente A** | **Komponente B** | **Komponente C** | **Komponente D** | **Rheologie in mPas** | **PD** |
|---|---|---|---|---|---|---|
| Mischung A, Nullprobe | 20 % Quarzsand 1,6-5,0 mm | 35 % Quarzsand 1,0-1,8 mm | 45 % Quarzsand 0,3-0,8 mm | - | 3600 mPas | 0,623 |
| Mischung A, Versuch 1 | 45 % Quarzsand 1,6-5,0 mm | 23 % Quarzsand 1,0-1,8 mm | 32 % Quarzsand 0,3-0,8 mm | - | 3420 mPas | 0,649 |
| Mischung A, Versuch 2 | 52 % Quarzsand 1,6-5,0 mm | 13 % Quarzsand 1,0-1,8 mm | 35 % Quarzsand 0,3-0,8 mm | - | 3400 mPas | 0,649 |
| Mischung A, Versuch 3 | 50 % Quarzsand 1,6-5,0 mm | 23 % Quarzsand 1,0-1,8 mm | 27 % Quarzsand 0,1-0,5 mm | - | 3300 mPas | 0,660 |
| Mischung A, Versuch 4 | 42 % Quarzsand 1,6-5,0 mm | 33 % Quarzsand 1,0-1,8 mm | 25 % Quarzsand 0,1-0,3 mm | - | 3180 mPas | 0,680 |
| Mischung A, Versuch 5 | 47 % Quarzsand 1,6-5,0 mm | 13 % Quarzsand 1,0-1,8 mm | 28 % Quarzsand 0,3-0,8 mm | 12% Quarzmehl 4900 | 3080 mPas | 0,710 |

Wie der Tabelle 1 zu entnehmen ist, wird durch eine Veränderung der Ma-%-Anteile der ersten, zweiten und dritten Quarzsandkomponente A, B, C eine Steigerung der Packungsdichte von 62,3 auf 64,9 % erreicht.

Als erste Füllstoffkomponente C wird Quarzsand mit einer Korngröße von 0,1 - 0,5 mm bzw. 0,1 - 0,3 mm gemäß den Versuchen 3 und 4 verwendet, wobei diese Füllstoffkomponente C die anfangs verwendete erste Füllstoffkomponente C in den Versuchen 1 und 2 mit einer Korngröße von 0,3 - 0,8 mm ersetzt. Hierdurch wird eine Steigerung der Packungsdichte auf 68,0 % erreicht.

Durch das zusätzliche Hinzumischen einer zweiten Füllstoffkomponente, nämlich Quarzmehl, zur Auffüllung von Zwischenräumen zwischen den Körnern der Quarzsandkomponenten A, B, C findet eine nochmalige Erhöhung der Packungsdichte auf 71,0 % statt.

Neben der Messung der Packungsdichte dient die Viskosität des Füllstoffgemisches in einem bestimmten Bindemittel bei konstantem Füllstoff-Feststoffgehalt als Maß. Dies wird in der Spalte Rheologie in mPas dargestellt.

Durch die Zumischung von Quarzmehl wird nicht nur die Packungsdichte optimiert, sondern auch die Oberflächerauhigkeit der daraus hergestellten Produkte verbessert und die Anschmutzneigung verringert. Diese beiden Effekte sind in zahlreichen Versuchen mittels Zahlen nachgewiesen worden.

Es ist somit nicht nur anzustreben, Hartz einzusparen und somit günstiger zu produzieren, sondern auch zugleich die Qualität der Endprodukte bzw. der Verbundwerkstoffe zu verbessern. Durch eine derartige Verbesserung der Oberfläche kann vorteilhaft erreicht werden, dass derartige Verbundwerkstoffe insbesondere für die Herstellung von Küchenspülen bevorzugt verwendet werden, da hier Platten mit geringer Oberflächenrauhigkeit aufgrund des Umgangs mit Lebensmitteln erwünscht sind. Eine Verbesserung der Oberflächenrauhigkeit führt auch zu einer Reduzierung der Herstellkosten, da weniger Spülen nach ihrer Herstellung aussortiert werden müssen.

| **Quarzmehlanteil** | **Oberflächenrauhigkeit** | **Anschmutzneigung** |
|---|---|---|
| | Abweichung (µm) | Zyklen |
| 0% | 12,3 | 80 |
| 2,50% | 10,6 | 76 |
| 5% | 8,2 | 27 |
| 7,50% | 7,3 | 14 |
| 10% | 4,6 | 10 |
| 15% | 2,1 | 9 |
| 20% | 2,4 | 9 |
| 25% | 2,3 | 10 |

Oberflächenrauhigkeit: mit einem Nadel wird die Oberfläche abgescannt. Die Abweichung in µm ist ein Maß für die Oberflächenrauhigkeit. Eine niedrige Abweichung bedeutet eine glatte Oberfläche.
Anschmutzneigung: Die Oberfläche wird mit einem Standardmaterial abgedeckt. Die Anzahl an Reinigungszyklen, bis zur vollständige Entfernung des Schmutzmaterials ist ein Maß für die Anschmutzneigung. Eine niedrige Zahl bedeutet eine hohe Reinigbarkeit.

Bei der Verwendung eines Quarzmehlanteils von 5 - 15 Ma% wird ein optimaler Kompromiss zwischen einer glatten Oberfläche und einer Heiß-Kalt-Beständigkeit des Verbundwerkstoffes erzielt. Dies ist insbesondere bei Herstellungen von Küchenspülen erwünscht.

Als Bindemittelkomponenten können organische Bindemittel, wie beispielsweise acryl-, epoxid- oder polyestergebundene Bindemittel oder auch anorganische, wie zementöse Bindemittel verwendet werden. Alternativ sind Mischungen aus derartigen Bindemitteln denkbar. Zur weiteren Verbesserung der Verarbeitungseigenschaften und der Viskosität können derartige Bindemittel mit Silanen oder mit anderen Haftvermittlern vermischt werden.

### Beispiel 2

Für die Herstellung von Küchenspülen aus Verbundwerkstoffen wird ein Füllstoffgemisch aus vier unterschiedlichen ersten Füllstoffkomponenten mit Farbsand unterschiedlicher Ma-%-Anteile und unterschiedlicher Korngrößen miteinander vermischt. Als Bewertungsmaßstab für diese Versuchsreihe dienen die Rheologiewerte (Zähigkeitswerte) des Füllstoffgemisches in einem vorgegebenen Bindemittel. Gemessen werden derartige Rheologiewerte mit einem Viskosimeter, wie es beispielsweise von der Firma Brookfield zur Verfügung gestellt wird.

**Tabelle 2**

| **Bezeichnung/ Datum** | **Zusammensetzung** | **+ Ma% Microglaskugeln** | **Feststoffgehalt f. Rheologie** | **Rheologie (∅ 2 Messungen)** |
|---|---|---|---|---|
| Farbsandmischung 24.08.04, V 0 | 36,30 Ma% Farbsand 1, 0,1-0,5mm | --- | 28,6 Ma% (=40g Bindemittel auf 100 g Sand) | 4440 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |
| Farbsandmischung 24.08.04, V 1 | 12,0 Ma% Farbsand 1, 0,1-0,5mm | --- | 28,6 Ma% | 3800 mPas |
| | 46,2 Ma% Farbsand 1, 0,3-0,8mm | | | |
| | 5,0 Ma% Farbsand 2, 0,1-0,5mm | | | |
| | 8,8 Ma% Farbsand 2, 0,3-0,8mm | | | |
| | 28,0 Ma% Quarzmehl 6 400 | | | |
| Farbsandmischung 24.08.04, V 2 | 36,30 Ma% Farbsand 1, 0,1-0,5mm | 1,0 Ma% Microglaskugeln 0-50µm | 28,6 Ma% | 4120 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |
| Farbsandmischung 24.08.04, V 3 | 36,30 Ma% Farbsand 1,0,1-0,5mm | 2,0 Ma% Microglaskugeln 0-50µm | 28,6 Ma% | 3500 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |
| Farbsandmischung 24.08.04, V 4 | 36,30 Ma% Farbsand 1, 0,1-0,5mm | 4,0 Ma% Microglaskugeln 0-50µm | 28,6 Ma% | 3040 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |
| Farbsandmischung 24.08.04, V 5 | 36,30 Ma% Farbsand 1,0,1-0,5mm | 2,0 Ma% Microglaskugeln 0-50µm | 23,1 Ma% (=30g Bindemittel auf 100g Sand) | 5680 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |
| Farbsand mischung 24.08.04, V 6 | 36,30 Ma% Farbsand 1,0,1-0,5mm | 2,0 Ma% Microglaskugeln 0-50µm | 25,1 Ma% (=33,5g Bindemittel auf 100g Sand) | 4480 mPas |
| | 45,94 Ma% Farbsand 1, 0,3-0,8mm | | | |
| | 6,48 Ma% Farbsand 2, 0,1-0,5mm | | | |
| | 11,28 Ma% Farbsand 2, 0,3-0,8mm | | | |

Wie der Tabelle 2 zu entnehmen ist, sinken die Rheologiewerte derartiger Farbsandmischungen durch den Einsatz von sehr feinem Quarzmehl, wie es durch einen Vergleich der Versuchsergebnisse V0 und V1 gezeigt wird, ab. Statt dem Quarzmehl werden in den Versuchen V2, V3, V4, V5 und V6 kugelrunde Mikroglaskugeln aus lichttransparentem Material verwendet.

Bereits bei einer relativ geringen Zugabemenge von Mikroglaskugeln mit einer Korngröße von 0 - 50 µm zeigt sich eine Verbesserung des Rheologiewertes gemäß dem Versuch V2.

Aus dem Versuch V6 geht hervor, dass bei einer Zumischung von 2,0 Ma-% Mikroglaskugeln ein Bindemittelanteil um 6 - 7 Ma-% verringert werden kann, während ähnliche Fließfähigkeitswerte, also Rheologiewerte des Füllstoffgemisches, erreicht werden. Dies führt zu der gewünschten Kostenersparnis.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Verfahren zur Herstellung von Verbundwerkstoffen durch Vermischen von kornartigen anorganischen und/oder organischen ersten Füllstoffkomponenten mit vorgegebenem ersten Korngrößenbereich und organischen und/oder anorganischen Bindemittelkomponenten, wobei ein Anteil der Bindemittelkomponenten durch mindestens eine kornartige zweite Füllstoffkomponente, nämlich Quarzmehl, mit gegenüber den ersten Korngrößen kleineren zweiten Korngrößen vor, nach oder während dem Vermischen ersetzt wird und mit den ersten Füllstoffkomponenten zur Auffüllung von zwischen den Körnern der ersten Füllstoffkomponenten bestehenden Zwischenräumen vermengt wird, wobei die zweite Füllstoffkomponente bis zu 30 Ma% des gesamten Füllstoffgemisches beträgt,
**dadurch gekennzeichnet, dass**
einzelne erste Füllstoffkomponenten durch dritte kornartige Füllstoffkomponenten mit gegenüber den Korngrößen der ersten Füllstoffkomponenten größeren Korngrößen ersetzt werden, wobei mindestens eine Füllstoffkomponente eine Korngröße von 1,0 - 1,8 mm oder 1,6 -5,0 mm aufweist.

2. Verfahren nach Anspruch 1,
**dadurch gekennzeichnet, dass**
der Quarzmehlanteil 5 -15 Ma% am Gesamtgemisch beträgt.

3. Verfahren nach Anspruch 2,
**dadurch gekennzeichnet, dass**
in einem ersten vorausgehenden Schritt die Anteile der ersten Füllstoffkomponenten so lange verändert und anschließend miteinander vermischt werden, bis eine gemessene Packungsdichte der vermischten Füllstoffkomponenten ein Maximum erreicht hat.

4. Verfahren nach einem der vorangegangenen Ansprüche,
**dadurch gekennzeichnet, dass**
die zweiten Füllstoffkomponenten vor dem Schritt des Ersetzens oberflächenbehandelt, insbesondere silanisiert, werden.

5. Verfahren nach einem der vorangegangenen Ansprüche,
**dadurch gekennzeichnet,** dass
die Schritte des Ersetzen des Anteils der Bindemittelkomponenten und des Vermischens der ersten Füllstoffkomponenten mit den Bindemittelkomponenten solange wiederholt werden, bis eine höhere Packungsdichte erreicht worden ist.

6. Verbundwerkstoff mit kornartigen anorganischen und/oder organischen ersten Füllstoffkomponenten mit vorgegebenem ersten Korngrößenbereich und organischen und/oder anorganischen Bindemittelkomponenten, wobei der Verbundwerkstoff mindestens eine kornartige zweite Füllstoffkomponente, nämlich Quarzmehl, mit gegenüber den ersten Korngrößen kleineren zweiten Korngrößen zur Auffüllung von zwischen den Körnern der ersten Füllstoffkomponenten bestehenden Zwischenräumen beinhaltet, wobei die zweite Füllstoffkomponente bis zu 30 Ma% des gesamten Füllstoffgemisches beträgt,
**dadurch gekennzeichnet, dass**
einzelne erste Füllstoffkomponenten durch dritte kornartige Füllstoffkomponenten mit gegenüber den Korngrößen der ersten Füllstoffkomponenten größeren Korngrößen ersetzt sind, wobei mindestens eine Füllstoffkomponente eine Korngröße von 1,0-1,8 mm oder 1,6 - 5,0 mm aufweist.

7. Verbundwerkstoff nach Anspruch 6,
**dadurch gekennzeichnet, dass**
die zweite Füllstoffkomponente mindestens ein feinteiliger Stoff, wie Quarzmehl, Sand, Schwerspat, CaCO₃, Talkum oder Mischungen daraus ist.

8. Verbundwerkstoff nach Anspruch 7,
**dadurch gekennzeichnet, dass**
die zweite Füllstoffkomponente mindestens ein synthetischer Stoff mit kugelförmiger Kornform, wie Mikroglaskugeln, ist.

9. Verbundwerkstoff nach Anspruch 8,
**dadurch gekennzeichnet, dass**
die kugelförmige Kornform Glaskugeln mit einem Durchmesser bis 50 µm oder von 50 µm bis 10 mm darstellt.

10. Verbundwerkstoff nach Anspruch 9,
**dadurch gekennzeichnet, dass**
die kugelförmige Kornform Glaskugeln mit einem Durchmesser von 75 µm bis 150 µm darstellt.

11. Verbundwerkstoff nach einem der vorangegangenen Ansprüche 6 - 10,
**dadurch gekennzeichnet, dass**
die Körner der zweiten und/oder von dritten Füllstoffkomponenten oberflächenbehandelt, insbesondere silanisiert sind.

12. Verwendung von Verbundwerkstoffen gemäß einem der Anspruch 6 - 11 für die Herstellung von Küchenspülen, Arbeitsplatten, Sanitärteilen, Fußboden oder Wandbeschichtungen oder sonstigen Formteilen.

## Claims

1. Method for producing composite materials by mixing granular inorganic and/or organic first filler components with a predetermined first grain size range and organic and/or inorganic binder components, a proportion of the binder components being substituted, before, after or during mixing, by at least one granular second filler component, in particular silica flour, with second grain sizes that are smaller than the first grain sizes and being mixed with the first filler components in order to fill up spaces present between the grains of the first filler components, the second filler component being up to 30 % by mass of the total filler mixture, **characterised in that** individual first filler components are substituted by third granular-like filler components having grain sizes that are greater than the grain sizes of the first filler components, at least one filler component having a grain size of from 1.0 to 1.8 mm or from 1.6 to 5.0 mm.

2. Method according to claim 1, **characterised in that** the silica flour proportion is from 5 to 15 % by mass of the total mixture.

3. Method according to claim 2, **characterised in that** in a first prior step, the proportions of the first filler components are varied and then mixed together until a measured packing density of the mixed filler components has reached a maximum.

4. Method according to any of the preceding claims, **characterised in that** the second filler components are surface-treated, in particular silanised, prior to the substitution step.

5. Method according to any of the preceding claims, **characterised in that** the steps of substituting the proportion of the binder components and of mixing the first filler components with the binder components are repeated until a relatively high packing density has been reached.

6. Composite material with granular-like inorganic and/or organic first filler components with predetermined first grain size ranges and organic and/or inorganic binder components, the composite material containing at least one granular-like second filler component, in particular silica flour, with second grain sizes that are smaller than the first grain sizes in order to fill the spaces present between the grains of the first filler components, the second filler component being up to 30 % by mass of the entire filler mixture, **characterised in that** individual first filler components are substituted by third granular-like filler components with grain sizes that are greater than the grain sizes of the first filler components, at least one filler component having a grain size of from 1.0 to 1.8 mm or from 1.6 to 5.0 mm.

7. Composite material according to claim 6, **characterised in that** the second filler component is at least one fine-particle substance, such as silica flour, sand, barite, CaCO₃, talc or mixtures thereof.

8. Composite material according to claim 7, **characterised in that** the second filler component is at least one synthetic substance having a spherical grain shape, such as micro glass spheres.

9. Composite material according to claim 8, **characterised in that** the spherical grain shape constitutes glass spheres with a diameter of up to 50 µm or from 50 µm to 10 mm.

10. Composite material according to claim 9, **characterised in that** the spherical grain shape constitutes glass spheres with a diameter of from 75 µm to 150 µm.

11. Composite material according to any of the preceding claims 6 to 10, **characterised in that** the grains of the second and/or of third filler components are surface-treated, in particular are silanised.

12. Use of composite materials according to any of claims 6 to 11 for the production of kitchen sinks, worktops, sanitary components, floorings or wall coatings or other moulded parts.

## Revendications

1. Procédé de fabrication de matériaux composites, par mélange de premiers composants de façon granulaire, inorganiques et/ou organiques, formant matière de remplissage, ayant une première plage granulométrique prédéfinie, et de composants organiques et/ou inorganiques formant liant, une partie des composants formant liant étant remplacée par au moins un deuxième composant de façon granulaire formant matière de remplissage, à savoir de la farine de quartz, ayant des deuxièmes granulométries plus petites que les premières granulométries, avant, après ou pendant le mélange, et étant mélangée aux premiers composants formant matière de remplissage pour remplir les espaces intermédiaires présents entre les grains des premiers composants formant matière de remplissage, le deuxième composant formant matière de remplissage représentant jusqu'à 30 % en masse de la totalité du mélange de matière de remplissage, **caractérisé en ce que** des premiers composants individuels formant matière de remplissage sont remplacés par des troisièmes composants de façon granulaire formant matière de remplissage, ayant des granulométries plus grosses que les granulométries des premiers composants formant matière de remplissage, au moins un composant formant matière de remplissage présentant une granulométrie de 1,0-1,8 mm ou de 1,6-5,0 mm.

2. Procédé selon la revendication 1, **caractérisé en ce que** la proportion de la farine de quartz est de 5 à 15 % en masse par rapport au mélange total.

3. Procédé selon la revendication 2, **caractérisé en ce que**, dans une première étape préliminaire, les parties des premiers composants formant matière de remplissage sont modifiées, puis mélangées les unes aux autres, jusqu'à ce qu'une masse volumique mesurée après tassement des composants mélangés formant matière de remplissage atteigne un maximum.

4. Procédé selon l'une des revendications précédentes, **caractérisé en ce que** les deuxièmes composants formant matière de remplissage sont soumis à un traitement superficiel, en particulier silanisés, avant l'étape de remplacement.

5. Procédé selon l'une des revendications précédentes, **caractérisé en ce que** les étapes de remplacement de la partie des composants formant liant et de mélange des premiers composants formant matière de remplissage aux composants formant liant sont répétées jusqu'à ce que l'on atteigne une valeur plus élevée de la masse volumique après tassement.

6. Matériau composite, avec des premiers composants de façon granulaire, inorganiques et/ou organiques, formant matière de remplissage, ayant une première plage granulométrique prédéfinie, et des composants organiques et/ou inorganiques formant liant, le matériau composite contenant au moins un deuxième composant granulaire formant matière de remplissage, à savoir de la farine de quartz, ayant des deuxièmes granulométries plus petites que les premières granulométries, pour le remplissage des espaces intermédiaires présents entre les grains des premiers composants formant matière de remplissage, le deuxième composant formant matière de remplissage représentant jusqu'à 30 % en masse de la totalité du mélange de matière de remplissage, **caractérisé en ce que** des premiers composants individuels formant matière de remplissage sont remplacés par des troisièmes composants de façon granulaire formant matière de remplissage, ayant des granulométries plus grosses que les granulométries des premiers composants formant matière de remplissage, au moins un composant formant matière de remplissage présentant une granulométrie de 1,0 à 1,8 mm ou de 1,6 à 5,0 mm.

7. Matériau composite selon la revendication 6, **caractérisé en ce que** le deuxième composant formant matière de remplissage est au moins une substance finement divisée telle que la farine de quartz, le sable, la baryte sulfatée, le CaCO₃, le talc ou les mélanges de ceux-ci.

8. Matériau composite selon la revendication 7, **caractérisé en ce que** le deuxième composant formant matière de remplissage est au moins une matière synthétique ayant une forme de grain sphérique, telle que des microbilles de verre.

9. Matériau composite selon la revendication 8, **caractérisé en ce que** la forme de grain sphérique représente des billes de verre ayant un diamètre pouvant aller jusqu'à 50 µm, ou étant compris entre 50 µm et 10 mm.

10. Matériau composite selon la revendication 9, **caractérisé en ce que** la forme de grain sphérique représente des billes de verre ayant un diamètre de 75 µm à 150 µm.

11. Matériau composite selon l'une des revendications précédentes 6 à 10, **caractérisé en ce que** les grains des deuxièmes et/ou des troisièmes composants formant matière de remplissage ont subi un traitement de surface, et en particulier sont silanisés.

12. Utilisation de matériaux composites selon l'une des revendications 6 à 11 pour fabriquer des éviers de cuisine, des plans de travail, des éléments pour sanitaires, des planchers ou des revêtements muraux, ou d'autres pièces façonnées.
